**Europäisches Patentamt**

**European Patent Office**

**Office européen des brevets**

(19)

(11) Veröffentlichungsnummer: **0 079 517**
**B1**

(12) # EUROPÄISCHE PATENTSCHRIFT

(45) Veröffentlichungstag der Patentschrift:
09.03.88

(51) Int. Cl.⁴: **G 01 J 3/46,** G 01 N 21/55

(21) Anmeldenummer: **82110096.3**

(22) Anmeldetag: **02.11.82**

(54) Vorrichtung zur Farbmessung.

(30) Priorität: **17.11.81 DE 3145633**

(43) Veröffentlichungstag der Anmeldung:
**25.05.83 Patentblatt 83/21**

(45) Bekanntmachung des Hinweises auf die Patenterteilung:
**09.03.88 Patentblatt 88/10**

(84) Benannte Vertragsstaaten:
**AT BE CH DE FR GB IT LI NL SE**

(56) Entgegenhaltungen:
**DE - A - 2 101 818**
**GB - A - 1 411 540**
**US - A - 2 797 334**
**US - A - 3 476 482**
**US - A - 3 531 208**

(73) Patentinhaber: **Akzo Coatings GmbH, Postfach 300709,
D-7000 Stuttgart 30 (DE)**
Patentinhaber: **Byk-Chemie GmbH, Abelstrasse 14,
D-4230 Wesel (DE)**

(72) Erfinder: **Lebling, Karl, Destouchesstrasse 44,
D-8000 München-40 (DE)**
Erfinder: **Reisser, Helmut, Kleiberstrasse 29,
D-8011 Vaterstetten (DE)**
Erfinder: **Saris, Hendrik Jan Antonie,
Bennebroekerdreef 42, NL-2121 CP Bennebroek (NL)**

(74) Vertreter: **Strehl, Peter, Dipl.-Ing. et al, Strehl,
Schübel-Hopf, Schulz Patentanwälte
Widenmayerstrasse 17 Postfach 22 03 45,
D-8000 München 22 (DE)**

**Beschreibung**

Die Erfindung bezieht sich auf eine Vorrichtung zur Verwendung bei der Farbmessung, insbesondere von Lackfarben.

Eine Farbmessvorrichtung mit den im ersten Teil des Patentanspruchs 1 angegebenen Merkmalen ist bekannt und in der DE-A-2 101 818 beschrieben. In den Ausführungsbeispielen dieser Druckschrift wird ein Prüfkopf beschrieben, bei dem die Kammer mit in einem Winkel von 45° zur Messfläche und in sechs radialen Ebenen angeordneten Lichtleitorganen zum Abführen der von der Probe reflektierten Lichtstrahlung zu einem auszuwertenden Messgerät versehen ist. Auf Seite 8 der genannten Druckschrift wird bemerkt, dass ausser einer Geometrie von 45° vier andere Anordnungen empfohlen wurden und dass je nach den Oberflächeneigenschaften der zu untersuchenden Probe die eine Geometrie besser sein kann als die andere. Unter Verwendung flexibler Lichtführungen bei der Konstruktion gemäss der DE-A-2 101 818 können Farbmessungen für jede gewünschte Geometrie durch Verwendung unterschiedlicher Abtastköpfe durchgeführt werden, wobei die Enden der Lichtführungen in entsprechenden Betrachtungswinkeln angeordnet werden und diese Köpfe leicht und schnell ausgewechselt werden können.

Eine derartige Auswechslung von Messköpfen hat jedoch erhebliche Nachteile, wenn eine bestimmte Probenoberfläche in unterschiedlichen Winkeln beleuchtet und beobachtet werden muss. Nach Auswechslung von Messköpfen ist es dabei nämlich schwierig bei der zweiten Messung den zweiten Messkopf genau auf dieselbe Stelle zu richten. Wenn zwischen der ersten und der zweiten Messung dadurch eine nahezu unvermeidbare Verschiebung stattfindet, erhält man ungenaue Messergebnisse. Diese Schwierigkeit wird besonders dann unüberwindlich, wenn an Proben mit leicht gewölbten Oberflächen die Lackfarbe gemessen werden muss. Diese Schwierigkeiten werden noch weiter verstärkt, wenn in der Lackoberfläche Inhomogenitäten, Strukturen und Unebenheiten vorhanden sind, was bekanntlich in der Praxis immer der Fall ist.

Auf Seite 8 der DE-A-2 101 818 ist ferner davon die Rede, dass für die Anordnung der die reflektierte Strahlung ableitenden Lichtleitorgane auch eine Kombination mehrerer Geometrien verwendet werden kann. Auch in einem solchen Fall ist jedoch nur vorgesehen, dass die Probe aus einer bestimmten Richtung beleuchtet wird und die über sämtliche Lichtleitorgane abgeleiteten Strahlungs-Reflexions-Signale durch eine Filterkombination korrigiert und zu einem einzigen Ausgangssignal verarbeitet werden.

Der Erfindung liegt die Aufgabe zugrunde, eine Farbmessvorrichtung anzugeben, die eine noch genauere Bestimmung der Farbe der jeweiligen Probe gestattet, insbesondere auch dann, wenn die Probe mit strukturierten und/oder Metallic-Lacken überzogen ist.

Die erfindungsgemässe Lösung dieser Aufgabe ist im Patentanspruch 1 angegeben. Die Erfindung beruht auf der Überlegung, dass bei der visuellen Bestimmung einer Farbe der Beleuchtungs- und/ oder der Beobachtungswinkel mehrfach oder kontinuierlich geändert wird, und dass für die Charakteristik einer Farbe, insbesondere eines Metallic-Lacks, die Aufeinanderfolge der verschiedenen optischen Eindrücke in Abhängigkeit von der genannten Winkeländerung typisch ist. Durch die bei der erfindungsgemässen Farbmessvorrichtung vorgesehene Schaltvorrichtung, die die Lichtleitorgane selektiv ein- und ausschaltet, lässt sich die wiederholte Änderung von Beleuchtungs- und/ oder Beobachtungswinkeln apparativ durchführen und die dadurch erzielte besondere Charakteristik berücksichtigen.

Vorteilhafte Ausgestaltungen und Verwendungen der Erfindung sind in den abhängigen Patentansprüchen gekennzeichnet.

Die Erfindung wird an Hand der schematischen Zeichnungen näher erläutert.

Fig. 1 zeigt den erfindungsgemässen Prüfkopf im Querschnitt nach Linie I–I.

Fig. 2 zeigt ebenfalls den Prüfkopf im Schnitt nach Linie II–II.

Fig. 3 zeigt die Innenseite der Messkammer in grösserem Massstab.

Fig. 4 zeigt teilweise eine perspektivische Darstellung der Aussenseite der Messkammer.

Fig. 5 zeigt den tragbaren Prüfkopf.

Fig. 6 zeigt die Farbmessung an einem PKW in der Werkstatt.

Fig. 7 zeigt eine abgeänderte Ausführungsform des erfindungsgemässen Prüfkopfes.

Fig. 8 zeigt die Innenseite der Messkammer einer abgeänderten Ausführungsform.

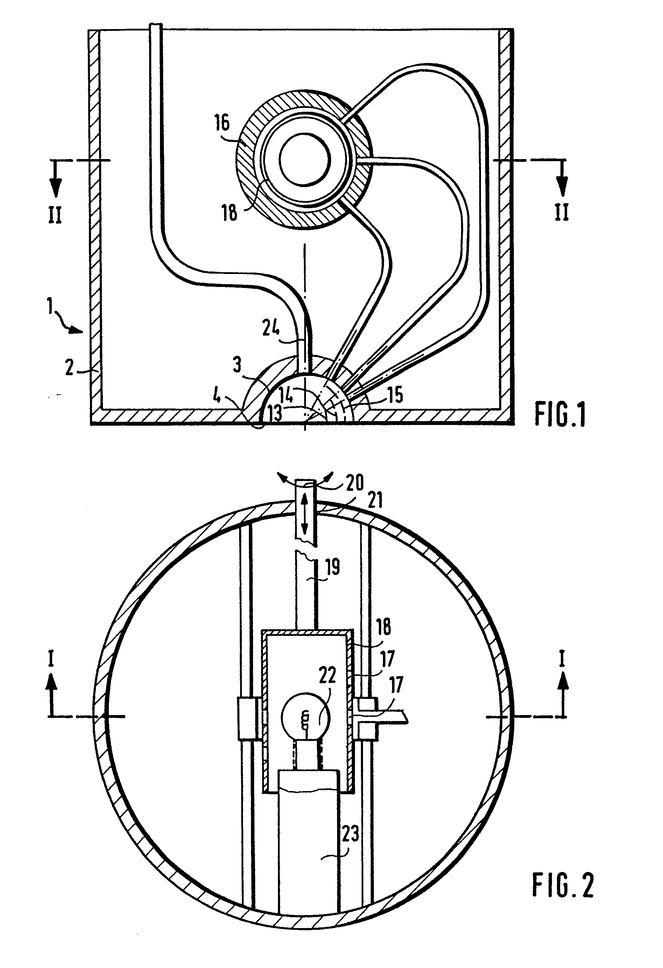

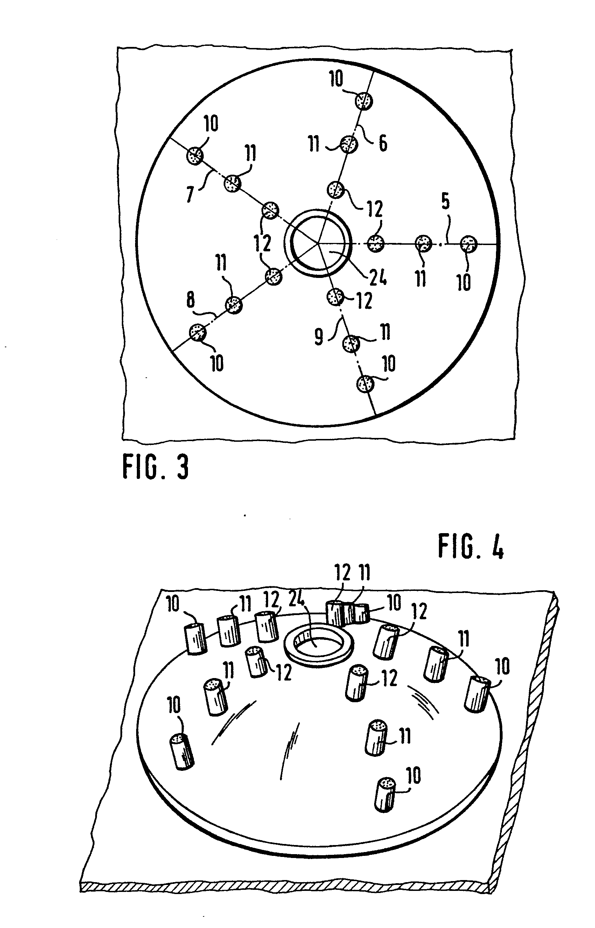

Die Figuren 1 und 2 zeigen teilweise und im Schnitt nach den Linien I bzw. II die wichtigsten Teile des im allgemeinen mit 1 angedeuteten Prüfkopfes. Der Prüfkopf 1 besteht aus einem Gehäuse 2, das an der Unterseite eine halbkugelförmige Messkammer 3 enthält, deren offene Unterseite die Messfläche 4 bildet. Die Messkammer 3 ist in der in Fig. 3 und 4 gezeigten Ausführungsform in fünf unterschiedlichen Radialebenen 5, 6, 7, 8 und 9 mit je drei als Lichtleitfaserbündel 10, 11 und 12 ausgeführten Lichtleitorganen versehen. In jeder der fünf Radialebenen 5–9 sind die drei Lichtleitfaserbündel 10, 11 und 12 in verschiedenen Winkeln 13, 14 und 15 der Grössen 15°, 30° und 70° zur Messfläche 4 angeordnet. Jedes der an sich bekannten Lichtleitfaserbündel kann aus mehreren Hunderten von Fäden bestehen. Die Lichtleitfaserbündel 10, 11 und 12 münden mit ihren von der Messkammer abgekehrten Enden in einen fest im Gehäuse angebrachten Ring 16. Innerhalb des Ringes 16 befindet sich ein mit Öffnungen 17 versehener Zylinder 18, welcher um seine Achse 19 drehbar (Pfeile 20) und axial verschiebbar (Pfeile 21) angeordnet ist. Der Zylinder 18 bildet eine Umhüllung für die einzige als Lichtquelle dienende Lampe 22, die mittels einer Stütze 23 am Gehäuse 2 befestigt ist. Abhängig von der jeweiligen Position des Zylinders 18 kann das von der Lampe 22 ausgestrahlte Licht mittels bestimmter Lichtleitfaserbündel 10, 11 und/oder 12 zur Beleuchtung einer sich in der Messfläche 4 befindlichen Probe zur Messkammer 3 geleitet werden. Im Zentrum der Messkammer 3 und senkrecht zur Messfläche 4 ist ein Lichtleitfaserbündel 24 zum Ableiten der von der Probe reflektierten Strahlung angebracht. Das in Fig. 4 gezeigte Lichtabführfaserbündel 24 ist mit einem elektrischen Auswertungsgerät 25, d.h. mit einem Spektrophotometer, verbunden, das im wesentlichen die nachfolgenden Funktionen hat:

Steuerfunktion mittels Mikroprozessor für den Prüfkopf 1, Erfassung und Auswertung von Messdaten, Übertragung von Messdaten und Ausdrukken von Messdaten.

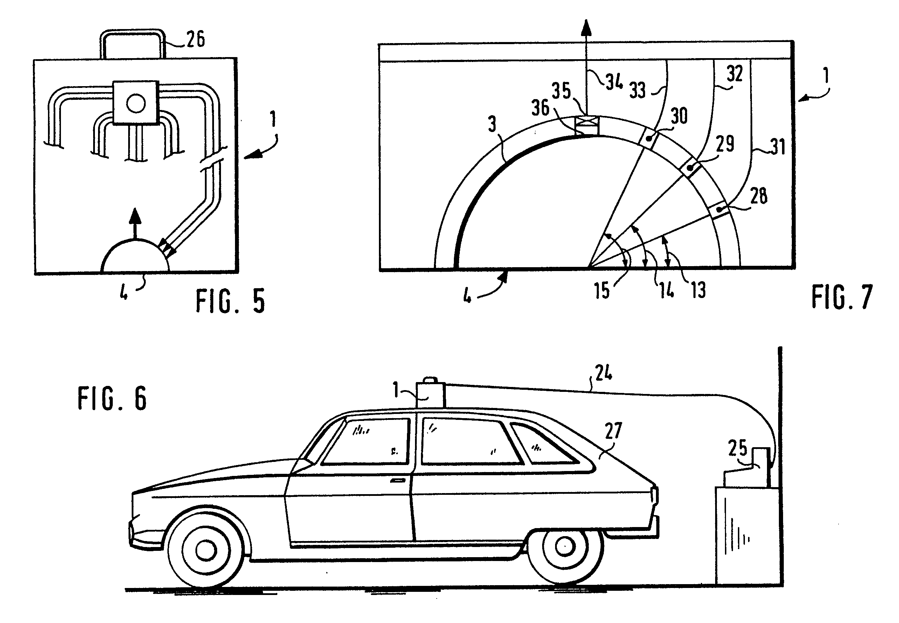

Fig. 5 zeigt den tragbaren Prüfkopf 1, der mit einem Griff 26 versehen ist.

Wie Fig. 6 zeigt, ist es mit der erfindungsgemässen Vorrichtung auf einfache Weise möglich, Lackoberflächen 27 an Ort und Stelle, z.B. in der Autoreparaturwerkstatt, mit grosser Genauigkeit zu messen. Der tragbare Prüfkopf 1 wird dabei auf eine gesäuberte, nicht beschädigte Stelle des zu lackierenden Wagens gesetzt. Danach wird das Messgerät eingeschaltet, nachdem das jeweils von der Art der Probe und der Lackart abhängige Messprogramm vorgewählt ist. Das vorgewählte Messprogramm kann erfindungsgemäss zum Beispiel die drei nachfolgenden Messvorgänge enthalten. Beim ersten Messvorgang befindet sich der Zylinder 18 und damit die Öffnungen 17 in einer solchen Position, dass nur über die fünf in einem Winkel von 15° zur Messfläche 4 und zur Probe angeordneten Lichtleitfaserbündel 10 eine Beleuchtung der Probe stattfindet und die von der Probe reflektierte Strahlung via Lichtleitfaserbündel 24 zum Auswertungsgerät 25 abgeleitet wird. Beim zweiten Messvorgang befinden sich der Zylinder 18 und damit die Öffnungen 17 in einer solchen Position, dass nur über die fünf in einem Winkel von 30° zur Messfläche 4 und zur Probe angeordneten Lichtleitfaserbündel 11 eine Beleuchtung der Probe stattfindet und die von der Probe reflektierte Strahlung via Lichtleitfaserbündel 24 zum Auswertungsgerät 25 abgeleitet wird. Beim dritten Messvorgang befinden sich der Zylinder 18 und damit die Öffnungen 17 in einer solchen Position, dass nur über die fünf in einem Winkel von 70° zur Messfläche 4 und zur Probe angeordneten Lichtleitfaserbündel 12 eine Beleuchtung der Probe stattfindet und die von der Probe reflektierte Strahlung via Lichtleitfaserbündel 24 zum Auswertungsgerät abgeleitet wird. Ausserdem ist erfindungsgemäss ein Messvorgang möglich, bei dem unter $n \geq 2$ Winkeln gleichzeitig beleuchtet wird. Nach Kombination der Ergebnisse dieser Messvorgänge und nach Vergleich mit Basislackfarbdaten im System wird dann vom Auswertungsgerät ein Lackrezept ausgedruckt, mit dem man in der Werkstatt, zum Beispiel mittels einer Farbtonmischanlage, die gewünschte Lackmenge und Lackfarbe zur Durchführung der gewünschten Lackierung anfertigen kann.

Bisher wurde in den PKW-Werkstätten das für eine bestimmte Reparatur notwendige Lackrezept im allgemeinen noch überwiegend vom Fachmann mittels Vergleich von mehr oder weniger ähnlichen Lackmusterplatten so gut wie möglich hergestellt. Dabei werden an diesen Fachmann sehr hohe Anforderungen gestellt. In der Praxis hat sich jedoch herausgestellt, dass diese Methode nicht optimal ist und öfter zu fehlerhaften Ergebnissen, d.h. unakzeptablen Farbunterschieden zwischen dem neugespritzten Karosserieteil und einem nicht behandelten Karosserieteil führt.

Bei Verwendung der erfindungsgemässen Vorrichtung werden die Nachteile der beschriebenen Methode beseitigt. Da man bei Messungen mit der erfindungsgemässen Vorrichtung die Möglichkeit hat, in einem einzigen Messkopf hintereinander die Probe in verschiedenen Winkeln und Radialebenen zu beleuchten, erhält man Messergebnisse, mit denen Lackrezepte hergestellt werden können, die zu optimalen Ergebnissen führen.

Statt des vorgenannten Messprogramms sind verschiedene andere Messprogramme möglich, bei denen die im vorliegenden Messkopf vorhandenen drei Lichtzuführorgane in den fünf Radialebenen entweder hintereinander, oder teilweise gleichzeitig oder alle gleichzeitig in beliebigen Kombinationen ein- bzw. ausgeschaltet werden können.

Das jeweils zweckmässigste Messprogramm soll vom Farbtechniker bestimmt werden. Wie schon erwähnt, ist ein bestimmter Messvorgang bei der gezeigten Ausführungsform des erfindungsgemässen Messgeräts mittels axialer Verschiebung und/oder Drehung des Zylinders 18 einstellbar. Die Manteloberfläche des Zylinders 18 weist Öffnungen 17 auf, die mit den unterschiedlichen Lichtleitorganen und Schaltmöglichkeiten korrespondieren. Das Verstellen des Zylinders 18 kann dabei einfach von Hand, oder gegebenenfalls mittels eines vom jeweiligen vorgewählten Messprogramm gesteuerten Elektromotors durchgeführt werden.

In der gezeigten Ausführungsform werden in jeder Radialebene drei Lichtleitfaserbündel 10, 11 und 12 in Winkeln von 15°, 30° und 70° verwendet. Im Rahmen der Erfindung kann man jedoch im Prinzip auch andere Winkel verwenden, zum Beispiel 20°, 45° und 75°. Weiter ist es im Rahmen der Erfindung im Prinzip möglich, in jeder Radialebene Lichtleitfaserbündel nicht in drei, sondern zum Beispiel in zwei, vier oder fünf Winkeln zur Messfläche anzubringen.

Fig. 7 zeigt einen Teil einer Variante der erfindungsgemässen Messvorrichtung, wobei ähnliche Teile gleich numeriert sind. Die Lichtzuführorgane werden dabei in jeder Radialebene von drei Lampen 28, 29 und 30 gebildet, die über elektrische Leiter 31, 32 und 33 mit Strom versorgt werden. Insgesamt sind bei dieser Ausführungsform $5 \times 3 = 15$ Lampen 28, 29 und 30 angeordnet, welche die Lichtleitfaserbündel ersetzen. In diesem Zusammenhang wird noch darauf hingewiesen, dass die in den Ansprüchen und im übrigen Teil dieser Patentanmeldung mit Lichtleitorganen angedeuteten Organe nicht auf die Verwendung von Lichtleitfaserbündeln beschränkt sind, sondern insbesondere auch die Verwendung einer Vielzahl von Lampen, wie in Fig. 7 dargestellt, umfassen.

Eine weitere Variante (siehe auch Fig. 7) der in den Figuren 1–4 gezeigten Ausführungsformen besteht darin, dass das zentrale Organ zum Ableiten der von der Probe reflektierten Lichtstrahlung von einem elektrischen Leiter 34 gebildet wird, welcher mittels eines Umwandlungsorgans 35 zur Umwandlung optischer Signale in elektrische Signale an der lichtstrahlenempfangenden Stelle 36 der Messkammer 3 angeordnet ist. Diese Ausführungsform hat den Vorteil, dass – insbesondere weil die gemessenen Werte über grössere Abstände z.B. 5 bis 25 Meter geleitet werden müssen, – ein einfacher elektrischer Leiter wie 34 erheblich besser und weniger störungsempfindlich ist, wie das beschriebene Lichtabführfaserbündel 24.

In den gezeigten Ausführungsformen der erfindungsgemässen Vorrichtung findet die Beleuchtung der Probe mittels Lichtleitfaserbündel 10, 11 und 12 und die Beobachtung, d.h. die Ableitung der von der Probe reflektierten Lichtstrahlen, mittels Lichtleitfaserbündeln 24 statt. Die erfindungsgemässe Vorrichtung ist jedoch nicht auf einen derartigen Lichtstrahlengang beschränkt. Gemäss der Erfindung ist der gezeigte Lichtstrahlengang im Prinzip völlig umkehrbar. Das heisst, dass zum Beispiel eine Ausführungsform denkbar ist, wobei die Beleuchtung hintereinander mittels der Lichtleitfaserbündel 24 und 10 und die Ableitung der von der Probe reflektierten Lichtstrahlen mittels der Lichtleitfaserbündel 11 und 12 stattfindet.

Es sei noch darauf hingewiesen, dass in der DE-PS 2 636 420 eine Farbmessvorrichtung beschrieben wird, bei der lichtabführende Lichtleitfaserbündel in vier verschiedenen Radialebenen vorgesehen sind. Dabei sind jedoch diese Lichtleitfaserbündel nur in einem einzigen Winkel von 45° zur Messfläche angebracht, so dass diese bekannte Vorrichtung nur beschränkte Möglichkeiten hat. Weiter findet bei dieser Vorrichtung die Beleuchtung und Beobachtung der Probe durch eine Glasplatte statt und ist diese Vorrichtung mit einem Probehebetisch versehen, so dass diese Vorrichtung auch daher nicht ohne weiteres für Messungen an Fahrzeugen geeignet ist.

Es wird noch auf den Artikel «Die externe Integrationskugel – ein neuartiges Messgerät zur Oberflächen-Farbbestimmung» von Ernst Spreitzhofer in Chemie-Technik, Sonderdruck 9 (1980) 337–342 (Dr. Alfred Hüthig Verlag, Heidelberg) hingewiesen. In diesem Artikel wird ein tragbarer Messkopf beschrieben, und in Paragraph 3.4 dieses Artikels wird die Farbmessung an lackierten Karosserieteilen eines Automobils mittels des tragbaren Prüfkopfes beschrieben und gezeigt (Abb. 18). Der hier zur Anwendung kommende Messkopf besitzt nur eine einzige diffuse und keine direkte Beleuchtungsmöglichkeit. Obwohl mit dieser bekannten Vorrichtung unter weniger anspruchsvollen Umständen vielleicht brauchbare Messergebnisse möglich sind, hat dieser vorbekannte Prüfkopf den Nachteil, dass nur in einer einzigen Radialebene und in einem einzigen Winkel (von 45°) zur Messfläche ein Lichtleitfaserbündel angeordnet ist und zwar neben dem zentralen senkrecht zur Messfläche angeordneten Lichtleitfaserbündel. Infolge der beschränkten Messwinkelmöglichkeiten dieses bekannten Prüfkopfes wird dieser Prüfkopf für die Lackfarbenmessung, vor allem wenn ziemlich hohe Anforderungen gestellt werden, wie bei Personenkraftwagen, in der Praxis nicht ohne weiteres für einsetzbar gehalten.

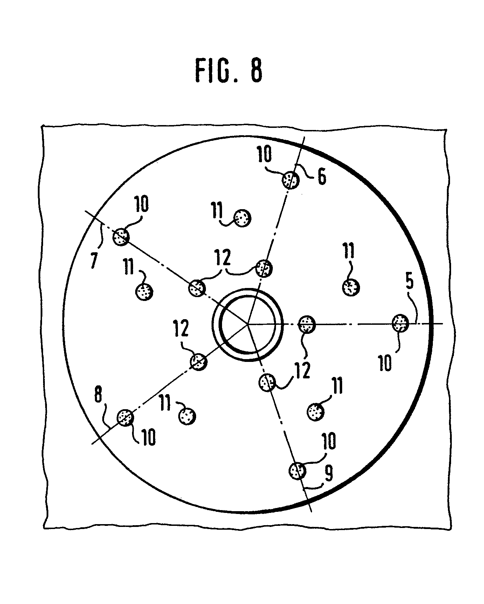

Bei der in Fig. 8 gezeigten abgeänderten Ausführungsform der Messkammer sind die drei Lichtleitfaserbündel 10, 11 und 12 ein wenig bezüglich der Radialebenen versetzt angeordnet.

Im Rahmen der vorliegenden Erfindung sind unterschiedliche Varianten der beschriebenen und gezeichneten Farbmessvorrichtung möglich. Zum Beispiel kann die Innenseite der Messkammer statt halbkugelförmig auch eine andere Form besitzen.

## Patentansprüche

1. Vorrichtung zur Farbmessung an Proben (27) mit einem eine Messkammer (3) mit einer Messfläche (4) aufweisenden Prüfkopf (1) sowie unter verschiedenen Winkeln zur Messfläche (4) und in unterschiedlichen Radialebenen an der Messkammer (3) angeordneten Lichtleitorganen (10 . . . 12, 24, 34) zum Zuführen von Strahlung an die Probe und Ableiten von von der Probe reflektierter Strahlung zu einem auswertenden Messgerät (25), dadurch gekennzeichnet, dass in mindestens zwei unterschiedlichen Winkeln zur Messfläche (4) angeordnete Lichtleitorgane (10 . . . 12) mit einer Lichtquelle (22; 28 . . . 30) bzw. mit einem Messgerät (25) verbunden sind, und dass eine Schaltvorrichtung (16, 18) zum selektiven Ein- und Ausschalten dieser die Strahlung zuführenden bzw. ableitenden Lichtleitorgane (10 . . . 12, 24, 34) vorgesehen ist.

2. Vorrichtung nach Anspruch 1, dadurch gekennzeichnet, dass die Schaltvorrichtung (16, 18) derart ausgeführt ist, dass sie jeweils alle oder ein Teil der im selben Winkel zur Messfläche (4) angeordneten Lichtleitorgane (10 . . . 12, 24, 34) ein- und ausschaltet.

3. Vorrichtung nach Anspruch 1 und 2, dadurch gekennzeichnet, dass in n (n ≥ 2) unterschiedlichen Winkeln zur Messfläche (4) Lichtleitorgane (10 . . . 12, 24, 34) angeordnet sind und die Schaltvorrichtung (16, 18) derart ausgeführt ist, dass sie alle in 1 bis n–1 unterschiedlichen Winkeln zur Messfläche (4) angeordneten Lichtleitorgane zusammen oder in beliebiger Kombination ein- und ausschaltet.

4. Vorrichtung nach einem der Ansprüche 1 bis 3, dadurch gekennzeichnet, dass die Schaltvorrichtung (16, 18) derart ausgeführt ist, dass sie jeweils alle oder einen Teil der in einer oder mehreren Radialebenen angeordneten Lichtleitorgane (10 . . . 12, 24, 34) ein- und ausschaltet.

5. Vorrichtung nach einem der Ansprüche 1 bis 4, dadurch gekennzeichnet, dass die Lichtleitorgane (10 . . . 12, 24, 34) im wesentlichen in drei bis sechs unterschiedlichen radialen Ebenen und im wesentlichen in zwei bis sechs, insbesondere in drei, unterschiedlichen Winkeln zur Messfläche angeordnet sind.

6. Vorrichtung nach einem der Ansprüche 1 bis 5, dadurch gekennzeichnet, dass im Zentrum der Messkammer (3) und senkrecht zur Messfläche (4) ein Lichtleitorgan (24, 34) zum Abführen der von der Probe (27) reflektierten Strahlung angebracht ist und dass die übrigen Lichtleitorgane (10 . . . 12) zum Zuführen der die Probe beleuchtenden Strahlung ausgeführt sind.

7. Vorrichtung nach einem der Ansprüche 1 bis 6, dadurch gekennzeichnet, dass die Lichtleitorgane (10 . . . 12, 24, 34) als Lichtleitfaserbündel ausgebildet sind.

8. Vorrichtung nach einem der Ansprüche 1 bis 7, dadurch gekennzeichnet, dass die Schaltvorrichtung (16, 18) ein bewegbares Organ (18) zum Ein- und Ausschalten eines oder mehrerer Lichtleitorgane (10 . . . 12) oder Gruppen von Lichtleitorganen aufweist.

9. Vorrichtung nach Anspruch 8, dadurch gekennzeichnet, dass das bewegbare Organ von einer zwischen der Lichtquelle (22) und den Lichtleitorganen (10 . . . 12) vorgesehenen, um ihre Achse drehbaren und axial verschiebbaren Hülse (18) gebildet ist, deren Mantelfläche den unterschiedlichen Lichtleitorganen (10 . . . 12) und Schaltmöglichkeiten entsprechende Öffnungen (17) aufweist.

10. Vorrichtung nach einem der Ansprüche 1 bis 9, dadurch gekennzeichnet, dass die Messfläche (4) direkt beleuchtbar ist.

11. Vorrichtung nach einem der Ansprüche 1 bis 10, dadurch gekennzeichnet, dass nur eine einzige Lichtquelle (22) in dem tragbaren Prüfkopf (1) vorgesehen und mittels Lichtleitfaserbündeln (10 . . . 12) mit der Messkammer (3) verbunden ist.

12. Vorrichtung nach einem der Ansprüche 1 bis 11, dadurch gekennzeichnet, dass ausserhalb oder innerhalb der Messkammer (3) ein Referenzobjekt, z.B. eine Standard-Keramik-Weissplatte, angeordnet ist.

13. Vorrichtung nach einem der Ansprüche 1 bis 12, dadurch gekennzeichnet, dass das bzw. die Lichtleitorgane zum Abführen der von der Probe (27) reflektierten Strahlung als photoelektrische Wandler, die an entsprechenden lichtstrahlempfangenden Stellen in der Messkammer (3) angeordnet sind, und als mit den Wandlern verbundene elektrische Leiter ausgebildet sind.

14. Vorrichtung nach einem der Ansprüche 1 bis 13, dadurch gekennzeichnet, dass die Schaltvorrichtung (16, 18) mindestens eine Gruppe von Lichtleitorganen (10 . . . 12) mittels eines, gegebenenfalls vorwählbaren, Programms ein- und ausschaltet.

15. Verwendung der Vorrichtung nach einem der Ansprüche 1 bis 14 zur Messung der Lackfarbe an der Karosserie eines Kraftfahrzeugs, insbesondere eines Personenkraftwagens.

16. Verwendung der Vorrichtung nach einem der Ansprüche 1 bis 14 zur Messung der Lackfarbe an strukturierten Oberflächen.

17. Verwendung der Vorrichtung nach einem der Ansprüche 1 bis 14 zur Messung der Farbe von Oberflächen, die mit Metallteilchen enthaltenden Lacken überzogen sind.

**Claims**

1. A device for use in chromatometry of samples (27), comprising a testing head (1) including a measuring cell (3) having a measuring surface (4) and optical light guide means (10 . . . 12, 24, 34) disposed at different angles to the measuring surface (4) and in different radial planes on the measuring cell (3) for supplying radiation to the sample and for diverting radiation reflected from the sample to an analysing measuring means (25), characterised in that optical light guide means (10 . . . 12) disposed at at least two different angles to the measuring surface (4) are connected to a light source (22; 28 . . . 30) or to a measuring means (25), respectively, and that a switching means (16, 18) is provided for selectively turning on and off said optical light guide means (10 . . . 12, 24, 34) supplying or diverting radiation.

2. The device according to claim 1, characterised in that the switching means (16, 18) is adapted respectively to turn on and off either all or part of the optical light guide means (10 . . . 12, 24, 34) disposed at the same angle to the measuring surface (4).

3. The device according to claims 1 and 2, characterised in that optical light guide means (10 . . . 12, 24, 34) are disposed at n (n $\geqq$ 2) different angles to the measuring surface (4) and the switching means (16, 18) is adapted to turn on and off all optical light guide means disposed at 1 to n−1 different angles to the measuring surface (4), either collectively or in any desired combination thereof.

4. The device according to any one of claims 1 to 3, characterised in that the switching means (16, 18) is adapted respectively to turn on and off all or part of the optical light guide means (10 . . . 12, 24, 34) disposed in one or several radial planes.

5. The device according to any one of claims 1 to 4, characterised in that the optical light guide means (10 . . . 12, 24, 34) are disposed substantially in three to six different radial planes and at substantially two to six, especially three, different angles to the measuring surface.

6. The device according to any one of claims 1 to 5, characterised in that an optical light guide means (24, 34) for diverting the radiation reflected from the sample (27) is disposed in the centre of the measuring cell (3) and vertically to the measuring surface (4), and that the remaining optical light guide means (10 . . . 12) are designed to supply the radiation irradiating the sample.

17. The device according to any one of claims 1 to 6, characterised in that the optical light guide means (10 . . . 12, 24, 34) are optical fibre bundles.

8. The device according to any one of claims 1 to 7, characterised in that the switching means (16, 18) comprises a movable means (18) for turning on and off one or several of the optical light guide means (10 . . . 12) or groups of optical light guide means.

9. The device according to claim 8, characterised in that the movable means is formed by an axially movable envelope (18) disposed between the light source (22) and the optical light guide means (10 . . . 12) and rotatable about its axis, the surface of said envelope being provided with apertures (17) which correspond to the various optical light guide means (10 . . . 12) and possible switching states.

10. The device according to any one of claims 1 to 9, characterised in that the measuring surface (4) may be directly irradiated.

11. The device according to any one of claims 1 to 10, characterised in that only a single light source (22) is provided in the portable testing head (1) and is connected to the measuring cell (3) by means of optical fibre bundles (10 . . . 12).

12. The device according to any one of claims 1 to 11, characterised in that a reference object, e.g. a standard ceramic white plate, is disposed either externally or internally of the measuring cell (3).

13. The device according to any one of claims 1 to 12, characterised in that the optical light guide means for diverting the radiation reflected from the sampel (27) is/are in the form photoelectric converting elements mounted on corresponding radiation-receiving locations in the measuring cell (3) and in the form of electrical conductors connected to the converting elements.

14. The device according to any one of claims 1 to 13, characterised in that the switching means (16, 18) turns on and off at least a group of optical light guide means (10 . . . 12) by means of a – possibly preselected – programme.

15. Use of the device according to any one of claims 1 to 14 for measuring the paint shade on a body of a motor vehicle, in particular of a passenger car.

16. Use of the device according to any one of claims 1 to 14 for measuring the paint shade on structured surfaces.

17. Use of the device according to any one of claims 1 to 14 for measuring the colour of surfaces coated with paints or enamels containing metal particles.

**Revendications**

1. Dispositif pour la mesure de la couleur d'articles (27), comprenant une chambre de mesure (3) avec une tête exploratrice (1) présentant une surface de mesure (4) ainsi que des organes de guidage de lumière (10 . . . 12, 24, 34) disposés sur la chambre de mesure (3) dans des plans radiaux différents et destinés à guider le rayonnement vers l'article et à renvoyer le rayonnement réfléchi par l'article vers un dispositif de mesure et d'évaluation (25), caractérisé en ce que des organes de guidage de lumière (10 . . . 12) formant au moins deux angles différents avec la surface de mesure (4) sont reliés à une source de lumière (20; 28 . . . 30) ou à un dispositif de mesure (25), et en ce qu'il est prévu un dispositif de commutation (16, 18) destiné à mettre sélectivement en service et hors service les organes de guidage de lumière (10 . . . 12, 24, 34) qui dirigent le rayonnement ou le renvoient.

2. Dispositif selon la revendication 1, caractérisé en ce que le dispositif de commutation (16, 18) est constitué de manière à mettre en service et hors service soit la totalité soit une partie des organes de guidage de lumière (10 . . . 12, 24, 34) formant le même angle avec la surface de mesure (4).

3. Dispositif selon une des revendications 1 et 2, caractérisé en ce que les organes de guidage de lumière (10 . . . 12, 24, 34) sont disposés en formant n (n $\geq$ 2) angles différents avec la surface de mesure (4) et en ce que le dispositif de commutation (16, 18) est constitué de manière à mettre en service et hors service en commun ou selon une combinaison quelconque la totalité des organes de guidage de lumière formant de 1 à n–1 angles différents avec la surface de mesure (4).

4. Dispositif selon l'une quelconque des revendications 1 à 3, caractérisé en ce que le dispositif de commutation (16, 18) est constitué de manière à mettre en service et hors service soit la totalité soit une partie des organes de guidage de lumière (10 . . . 12, 24, 34) disposés dans un ou plusieurs plans radiaux.

5. Dispositif selon l'une quelconque des revendications 1 à 4, caractérisé en ce que les organes de guidage de lumière (10 . . . 12, 24, 34) sont disposés essentiellement dans trois à six plans radiaux différents et forment essentiellement de deux à six, et notamment trois angles différents avec la surface de mesure (4).

6. Dispositif selon l'une quelconque des revendications 1 à 5, caractérisé en ce qu'un organe de guidage de lumière (24, 34) destiné à renvoyé le rayonnement réfléchi par l'article (27) est monté au centre de la chambre de mesure (3) et perpendiculairement à la surface de mesure (4) et en ce que les autres organes de guidage de lumière (10 . . . 12) sont constitués pour envoyer sur l'article le rayonnement lumineux.

7. Dispositif selon l'une quelconque des revendications 1 à 6, caractérisé en ce que les organes de guidage de lumière (10 . . . 12, 24, 34) sont constitués sous forme de faisceaux de fibres de guidage de lumière.

8. Dispositif selon l'une quelconque des revendications 1 à 7, caractérisé en ce que le dispositif de commutation (16, 18) comprend un organe mobile (18) destiné à mettre en service et hors service l'un ou plusieurs des organes de guidage de lumière (10 . . . 12), ou des groupes d'organes de guidage de lumière.

9. Dispositif selon la revendication 8, caractérisé en ce que l'organe mobile est constitué par un manchon (18) prévu entre la source de lumière (22) et les organes de guidage de lumière (10 . . . 12), pouvant tourner autour de son axe et mobile en direction axiale, dont la surface d'enveloppe présente des ouvertures (17) correspondant aux différents organes de guidage de lumière (10 . . . 12) et aux différentes possibilités de commutation.

10. Dispositif selon l'une quelconque des revendications 1 à 9, caractérisé en ce que la surface de mesure (4) peut être éclairée directement.

11. Dispositif selon l'une quelconque des revendications 1 à 10, caractérisé en ce qu'une unique source de lumière (22) est prévue sur la tête exploratrice portative (1) et est reliée à la chambre de mesure (3) par des faisceaux de fibres de guidage de lumière (10 . . . 12).

12. Dispositif selon l'une quelconque des revendications 1 à 11, caractérisé en ce qu'un élément de référence, tel qu'une plaque blanche en céramique standard, est disposé à l'extérieur ou à l'intérieur de la chambre de mesure (3).

13. Dispositif selon l'une quelconque des revendications 1 à 12, caractérisé en ce que le ou les organes de guidage de lumière destinés à renvoyer le rayonnement réfléchi par l'article (27) sont constitués sous forme de transducteurs photoélectriques disposés dans des positions de réception de faisceau lumineux correspondantes dans la Ichambre de mesure (3), et d'un conducteur électrique relié aux transducteurs.

14. Dispositif selon l'une quelconque des revendications 1 à 13, caractérisé en ce que le dispositif de commutation (16, 18) met en service et hors service au moins un groupe d'organes de guidage de lumière (10 . . . 12) au moyen d'un programme pouvant être éventuellement choisi à l'avance.

15. Utilisation du dispositif selon l'une quelconque des revendications 1 à 14, en vue de la mesure de la couleur laquée appliquée sur la carrosserie d'un véhicule automobile, notamment d'une voiture pour passagers.

16. Utilisation du dispositif selon l'une quelconque des revendications 1 à 14, en vue de la mesure de la couleur laquée appliquée sur des surfaces structurées.

17. Utilisation du dispositif selon l'une quelconque des revendications 1 à 14, en vue de la mesure de la couleur de surfaces recouvertes de laques contenant des particules métalliques.

FIG.1

FIG.2

FIG. 3

FIG. 4

FIG. 5

FIG. 6

FIG. 7

0 079 517

FIG. 8